# EUROPEAN PATENT APPLICATION

(11) **EP 4 542 475 A1**
(43) Date of publication of application: **23.04.2025**
(21) Application number: 23822950.4
(22) Date of filing: 02.06.2023
(51) Int. Cl.: G06Q 20/06

(54) **CROSS-BORDER PAYMENT METHOD AND APPARATUS, AND DEVICE**

(30) Priority: 17.06.2022 CN 202210693532
(71) Applicant: Digital Currency Institute, The People's Bank of China, Beijing 100071 (CN); Shenzhen Financial Technology Institute (Financial Technology Institute, PBC), Shenzhen, Guangdong 518046 (CN)
(72) Inventor: MU, Changchun, Beijing 100071 (CN); DI, Gang, Beijing 100071 (CN); LYU, Yuan, Beijing 100071 (CN); LIU, Shu, Beijing 100071 (CN); YI, Yu, Beijing 100071 (CN)
(74) Representative: Winter, Brandl - Partnerschaft mbB
(86) International application number: PCT/CN2023/097986
(87) International publication number: WO 2023/241381

(57) **Abstract**

A cross-border payment method, including: receiving a payment operation request, wherein the payment operation request is configured to request to pay for a domestic transaction order by using a digital wallet created on a client; in response to detecting an indication operation of a user, acquiring card information of a target overseas bank card that is about to recharge the digital wallet; sending a payment request to a first bank server of a target operator system of the digital wallet, so as to request to exchange a currency in the target overseas bank card into a digital currency to recharge the digital wallet, and using a balance in the digital wallet to pay for the transaction order; and receiving payment result information sent by the first bank server, wherein the payment result information is configured to indicate that the digital wallet has been recharged by using the target overseas bank card and that the domestic transaction order has been paid by using the digital wallet. The method can improve the efficiency of recharging the digital wallet by using the overseas bank card within the border and the efficiency of paying for the domestic transaction order.

## Description

The present application claims the priority of Chinese Patent Application No. 202210693532.2, filed on June 17, 2022, the entire contents of which are herein incorporated by reference.

### Technical Field

The present disclosure relates to the technical field of mobile payment, and in particular to a cross-border payment method and apparatus, and a device.

### Background

At present, if users holding overseas bank cards want to make purchases in China, they need to first use the overseas bank cards to exchange RMB banknotes on Automated Teller Machines (ATMs), and then they may make purchases.

### Summary

In one aspect, some embodiments of the present disclosure provide a cross-border payment method, including: receiving a payment operation request, wherein the payment operation request is configured to request to pay for a domestic transaction order by using a digital wallet created on a client; in response to detecting an indication operation of a user, acquiring card information of a target overseas bank card that is about to recharge the digital wallet, wherein the indication operation is configured to instruct to use an overseas bank card to recharge the digital wallet and to use the digital wallet to pay for the domestic transaction order; sending a payment request to a first bank server of a target operator system of the digital wallet, so as to request to exchange a currency in the target overseas bank card into a digital currency to recharge the digital wallet, and use a balance in the digital wallet to pay for the domestic transaction order; and receiving payment result information sent by the first bank server, wherein the payment result information is configured to indicate that the digital wallet has been recharged by using the target overseas bank card and that the domestic transaction order has been paid by using the digital wallet.

In some embodiments, before sending the payment request to the first bank server of the target operator system of the digital wallet, the method further includes: sending a payment verification request to an issuing bank server of the target overseas bank card, wherein the payment verification request is forwarded by the first bank server of the target operator system to the issuing bank server of the target overseas bank card, the payment verification request is configured to request the issuing bank server of the target overseas bank card to verify the domestic transaction order, the target operator system is any one operator system which is specified by the user from a plurality of operator systems supporting a digital wallet service when the digital wallet is created, and the target operator system supports an international card acquiring service; and receiving a payment verification result of the payment verification request from the issuing bank server of the target overseas bank card, wherein the payment verification result is forwarded by the issuing bank server to the client via the first bank server.

In some embodiments, before sending the payment request to the first bank server of the target operator system of the digital wallet, the method further includes: sending a payment verification request to the issuing bank server of the target overseas bank card, wherein the payment verification request is forwarded by the first bank server of the target operator system to a second bank server and is forwarded by the second bank server to the issuing bank server of the target overseas bank card, the payment verification request is configured to request the issuing bank server of the target overseas bank card to verify the domestic transaction order, the target operator system is any one operator system which is specified by the user from a plurality of operator systems supporting a digital wallet service when the digital wallet is created, and an operator system to which the second bank server belongs supports an international card acquiring service; and receiving a payment verification result of the payment verification request from the issuing bank server of the target overseas bank card, wherein the payment verification result is sent by the issuing bank server to the first bank server of the target operator system and is forwarded by the first bank server to the client via the second bank server.

In some embodiments, sending the payment verification request to the issuing bank server of the target overseas bank card includes: sending an identity verification request to the issuing bank server of the target overseas bank card, wherein the identity verification request includes transaction environment information of the domestic transaction order, and the identity verification request is configured to request the issuing bank server to perform identity verification on the domestic transaction order based on the transaction environment information.

In some embodiments, sending the payment verification request to the issuing bank server of the target overseas bank card further includes: displaying an issuing bank verification interface of the target overseas bank card, and acquiring check information input by the user on the issuing bank verification interface; and sending a check information verification request to the issuing bank server of the target overseas bank card, wherein the check information verification request includes the check information input by the user on the issuing bank verification interface, and the check information verification request is configured to request the issuing bank server to check the domestic transaction order based on the check information.

In some embodiments, sending the payment verification request to the issuing bank server of the target overseas bank card further includes: sending an initialization verification request to the issuing bank server of the target overseas bank card, wherein the initialization verification request includes the card information of the target overseas bank card, and the initialization verification request is configured to request the issuing bank server to perform initialization verification on the domestic transaction order based on the card information of the target overseas bank card.

In some embodiments, sending the payment request to the first bank server of the target operator system of the digital wallet includes: acquiring payment password information of the digital wallet, which is input by the user, and sending the payment request to the first bank server of the target operator system, wherein the payment request includes the payment password information.

In some embodiments, the method further includes: displaying a first interface in response to the payment operation request, wherein the first interface includes a target control, and the target control is configured to instruct to use the overseas bank card to recharge the digital wallet and to pay; and detecting the indication operation of the user includes: detecting an operation of the user for the target control.

In some embodiments, the method further includes: displaying a second interface in response to the payment operation request, wherein the second interface includes a first control, and the first control is configured to instruct to recharge the digital wallet and to pay; and detecting the indication operation of the user includes: displaying a third interface after detecting an operation of the user for the first control, wherein the third interface includes a second control, and the second control is configured to instruct to use the overseas bank card to recharge the digital wallet; and detecting an operation of the user for the second control.

In some embodiments, acquiring the card information of the target overseas bank card includes: detecting an operation for the card information of the target overseas bank card, which is input by the user; or detecting an operation for the registered target overseas bank card of the digital wallet, which is indicated by the user.

In some embodiments, the method further includes: displaying a fourth interface after receiving the payment operation request, wherein the fourth interface includes prompt information, and the prompt information is configured to prompt the user to input card information of a bank card which recharges the digital wallet for payment; detecting the indication operation of the user includes: detecting an operation for the card information of the bank card, which is input by the user, wherein the input bank card is an overseas bank card; or detecting an operation for a registered bank card of the digital wallet, which is indicated by the user, wherein the registered bank card is an overseas bank card; and acquiring the card information of the target overseas bank card includes: acquiring the card information of the overseas bank card, which is input by the user; or acquiring the card information of the registered overseas bank card of the digital wallet, which is indicated by the user.

In some embodiments, receiving the payment operation request includes: receiving the payment operation request in response to a code scanning operation for a collection code; or receiving the payment operation request in response to a code scanned operation for a payment code of the digital wallet.

In another aspect, an embodiment of the present disclosure provides a cross-border payment apparatus, including: a receiving module, configured to receive a payment operation request, wherein the payment operation request is configured to request to pay for a domestic transaction order by using a digital wallet created on a client; an acquisition module, configured to: in response to detecting an indication operation of a user, acquire card information of a target overseas bank card that is about to recharge the digital wallet, wherein the indication operation is configured to instruct to use an overseas bank card to recharge the digital wallet and to use the digital wallet to pay for the domestic transaction order; and a payment module, configured to send a payment request to a first bank server of a target operator system of the digital wallet, so as to request to exchange a currency in the target overseas bank card into a digital currency to recharge the digital wallet, and using a balance in the digital wallet to pay for the domestic transaction order; and the receiving module is further configured to receive payment result information sent by the first bank server, wherein the payment result information is configured to indicate that the digital wallet has been recharged by using the target overseas bank card and that the domestic transaction order has been paid by using the digital wallet.

In another aspect, an embodiment of the present disclosure provides an electronic device, including: a processor; and a memory, configured to store an executable instruction of the processor, wherein the processor is configured to execute the instruction so as to implement the method in the first aspect and any possible implementation of the first aspect.

In another aspect, provided is a computer-readable storage medium, wherein when an instruction in the computer-readable storage medium is executed by a processor of an electronic device, the electronic device may execute the method in the first aspect and any possible implementation of the first aspect.

### Brief Description of the Drawings

Fig. 1 is a schematic diagram of an application scenario according to a general technology;
Fig. 2 is a schematic diagram of an implementation architecture according to one or more embodiments;
Fig. 3 is a flowchart of a cross-border payment method according to one or more embodiments;
Fig. 4 is a schematic interface diagram of a first interface according to one or more embodiments;
Fig. 5 is a schematic interface diagram according to one or more embodiments;
Fig. 6 is a flowchart of another cross-border payment method according to one or more embodiments;
Fig. 7 is a flowchart of another cross-border payment method according to one or more embodiments;
Fig. 8 is a schematic interaction diagram of sending a payment verification request to an issuing bank server of a target overseas bank card according to one or more embodiments;
Fig. 9 is a flowchart of another cross-border payment method according to one or more embodiments;
Fig. 10A is another schematic interface diagram according to one or more embodiments;
Fig. 10B is a schematic scenario diagram according to one or more embodiments;
Fig. 11 is a block diagram of a cross-border payment apparatus according to one or more embodiments; and
Fig. 12 is a block diagram of an electronic device according to one or more embodiments.

### Detailed Description of the Embodiments

In order to enable those ordinary skilled in the art to better understand the technical solutions in the embodiments of the present disclosure, the technical solutions in the embodiments of the present disclosure will be clearly and completely described below in combination with the drawings.

It should be noted that, the terms "first" and "second" and the like in the specification, the claims and the above-mentioned drawings in the embodiments of the present disclosure are used for distinguishing similar objects, and are not necessarily used for describing a specific sequence or precedence order. It should be understood that the data used in this way may be interchanged under appropriate circumstances, so that some embodiments of the present disclosure described herein may be implemented in a sequence other than those described herein. The implementations described in the following exemplary embodiments do not represent all implementations consistent with the embodiments of the present disclosure. Instead, they are merely examples of apparatuses and methods consistent with some aspects of the embodiments of the present disclosure as detailed in the appended claims.

It should be noted that in the embodiments of the present disclosure, "at least one of A, B and C" has the same meaning as "at least one of A, B or C", and both include the following combinations of A, B and C: only A, only B, only C, a combination of A and B, a combination of A and C, a combination of B and C, and a combination of A, B and C.

Before a cross-border payment method provided in the embodiments of the present disclosure is described in detail, related elements, application scenarios and implementation environments involved in the embodiments of the present disclosure are first briefly described.

Firstly, the related elements involved in the embodiments of the present disclosure are briefly described.

Digital currency, which is currency in a digital form, for example, including Bitcoin, Litecoin, infinite coins, digital gold currency, digital RMB, etc.

Digital RMB, which is a legal tender in the digital form, that is, a digital form of banknote RMB, and is equivalent to the banknote RMB. The digital RMB is operated by a specified operator system and is exchanged for the public, is based on a generalized account system, supports a bank account loose coupling function, and is equivalent to the paper currency and coins.

Electronic wallet, which is configured to record or store the electronic currencies, such as the electronic cashes, the electronic changes, the security changes, the electronic credits, the online currencies, the digital currencies, etc.

Digital wallet, which is one of the electronic wallet and is a carrier for recording and storing digital currency (such as digital RMB).

Operator system, which is a commercial bank having a condition of providing exchange services between the digital wallets and the digital currency (such as digital RMB) for the public.

Client (such as a digital RMB client involved in the embodiments of the present disclosure), which is a digital currency service platform developed for personal users, and provides digital wallet opening and management services, and digital currency (such as digital RMB) exchange and circulation services.

3DS (3-Domain Secure) payment verification system, which is first pushed out by the international card organization Visa to protect card-free transactions in e-commerce. Then, other card organizations have pushed out their own 3DS payment verification systems.

Secondly, the application scenarios involved in the embodiments of the present disclosure are briefly described.

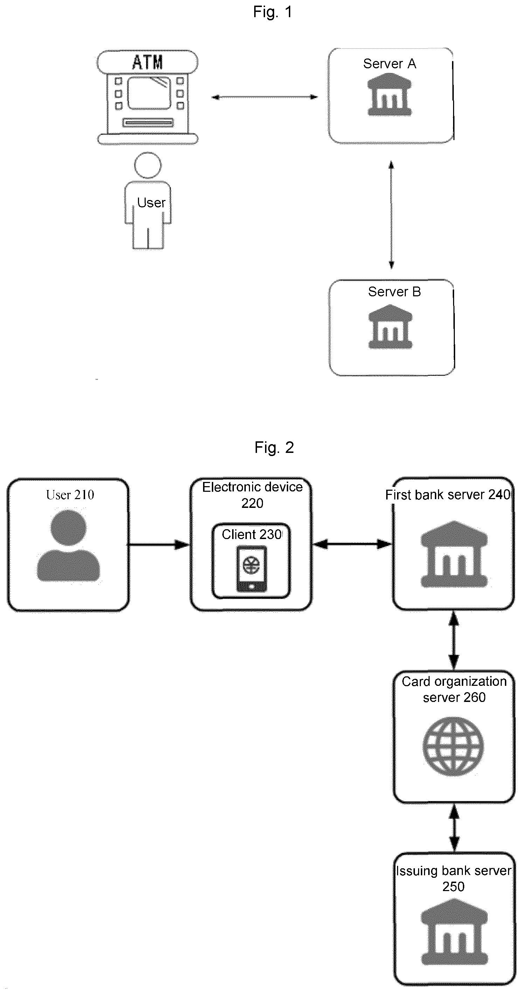

As shown in Fig. 1, in the general technology, if wanting to make purchases in China, a user holding an overseas bank card needs to open an international withdrawal function for the overseas bank card, and then hold the overseas bank card to an ATM supporting the withdrawal of the overseas bank card for withdrawal. For example, the ATM sends, by means of a server A of a banking operator to which the ATM machine belongs, an exchange request to a server B of a banking operator to which the overseas bank card belongs, so as to request to exchange the currency in the overseas bank card into the RMB, and RMB banknotes are output to the user by the ATM.

Moreover, the ATMs are usually unfixed in positions and limited in number, therefore ATMs supporting the withdrawal of overseas bank cards are fewer. This consumption mode brings great inconvenience to overseas users who require cross-border payment, and seriously affects the transaction efficiency of the overseas users.

An embodiment of the present disclosure provides a cross-border payment method, which is used for a client, wherein a digital wallet is configured on the client. When an overseas user needs to pay for a domestic transaction order, by using the cross-border payment method in the embodiment of the present disclosure, the balance in an overseas bank account may be exchanged into the digital currency to pay for the domestic transaction order, thereby improving the efficiency of recharging the digital wallet by using an overseas bank card in China and the efficiency of paying for the domestic transaction order. In some embodiments, after logging in to the client, the user performs online recharging on the digital wallet on the client by using the card information of the overseas bank card, and uses the balance in the digital wallet to pay for the domestic transaction order, so that the domestic transaction order can be paid by using the overseas bank card.

An implementation environment (implementation architecture) involved in the embodiments of the present disclosure is briefly described below.

Fig. 2 is a diagram of an implementation architecture according to some embodiments of the present disclosure. A user 210 installs a client 230 on an electronic device 220, and the user 210 may be an overseas user. The overseas user may be a user who holds an overseas bank card, or a user who registers an account by using overseas information such as an overseas mobile phone number. The client 230 may be a digital RMB client, and may also be other client names, which is not limited in the embodiments of the present disclosure. The client 230 may be an application (APP). When it is necessary to pay for a domestic transaction order, the user 210 may select any electronic wallet created on the client 230 for payment. If the balance in the electronic wallet for payment is insufficient to pay for the domestic transaction order, a first bank server 240 of a target operator system that provides services for the electronic wallet recharges, by means of an issuing bank server 250 and a card organization server 260 of the overseas bank card, the electronic wallet by using the currency in the overseas bank card and pays.

The electronic wallet is configured to store the electronic currency. For example, the electronic wallet may be a digital wallet, and the electronic currency may be the digital currency. In some embodiments of the present disclosure, the digital wallet may be configured to store the currency in a preset form, and the currency in the preset form supports domestic transaction payment. For example, the digital wallet is configured to store the domestic legal digital currency, such as the digital RMB.

In some embodiments, the electronic device 220 may be a terminal device or a server. The terminal device may be a smart phone, a tablet computer, a palmtop computer, a vehicle-mounted terminal, a desktop computer, a notebook computer, and the like. The server may be any server or server cluster, which is not limited in the embodiments of the present disclosure.

In some embodiments, the first bank server 240, the issuing bank server 250 or the card organization server 260 may be a server, or may be a server cluster including a plurality of servers, which is not limited in the embodiments of the present disclosure.

In addition, it should be noted that user information (including, but not limited to, user equipment information, personal user information, bank card information of a user, and the like) involved in the embodiments of the present disclosure is information authorized by the user or fully authorized by each party.

For ease of understanding, the cross-border payment method provided in the embodiments of the present disclosure will be described in detail below in combination with the drawings.

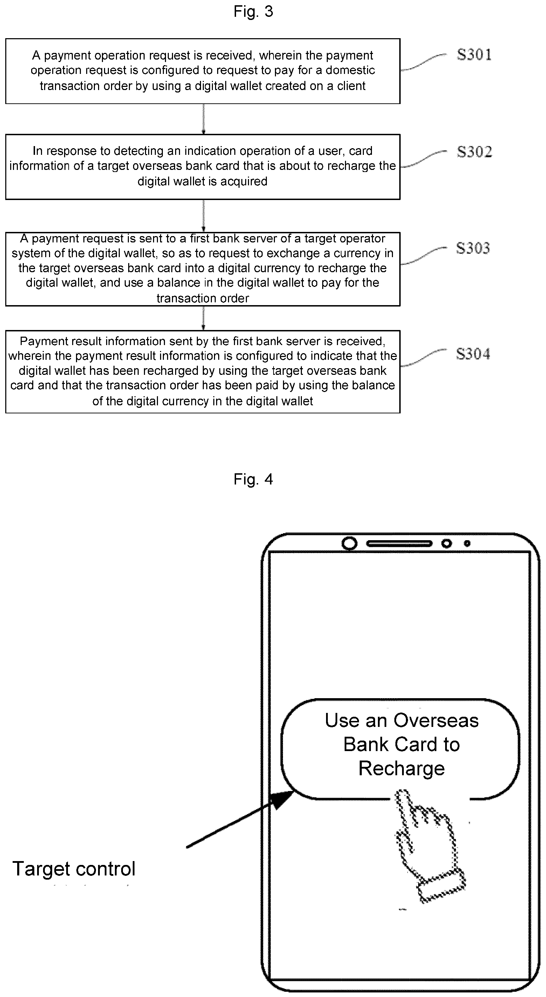

Fig. 3 is a flowchart illustrating a cross-border payment method according to an exemplary embodiment, and the method is applied to an electronic device. Or, the method is applied to a client installed on the electronic device. Or, the method is applied to an application installed on the electronic device. As shown in Fig. 3, the cross-border payment method includes the following steps.

Step 301: a payment operation request is received, wherein the payment operation request is configured to request to pay for a domestic transaction order by using a digital wallet created on a client.

In some embodiments, after downloading the client, the user performs registration by using an overseas mobile phone number and logs in to the client by using the overseas mobile phone number after completing the registration. A user/account registered by using the overseas mobile phone number may be referred to as an overseas user/account.

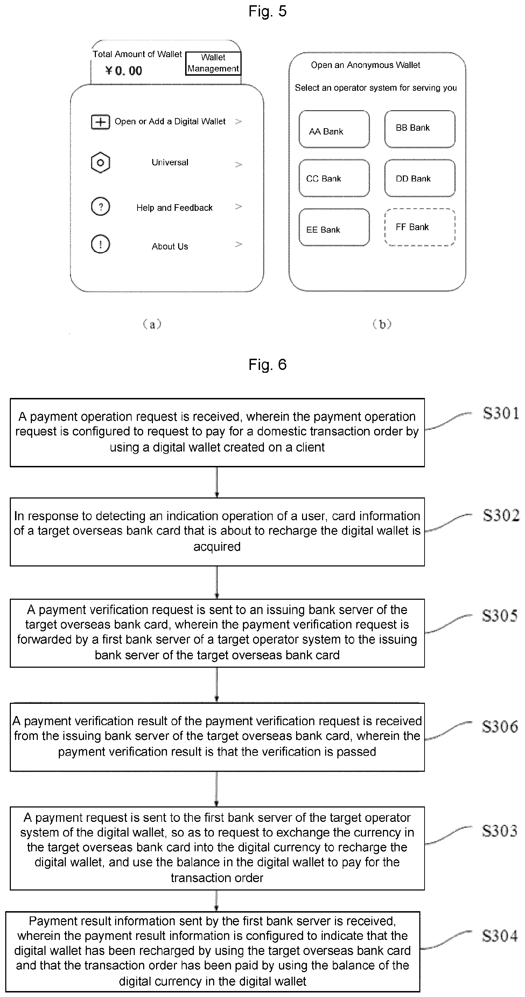

In addition, after the user logs in to the client by using the overseas mobile phone number, the client may display an interface as shown in (a) in Fig. 5, a total amount of wallet is displayed on the interface, wherein the total amount is configured to represent a total balance of the digital currency of all digital wallets of the logged in account. In addition, at least one of a "Wallet Management" control, an "Open or Add a Digital Wallet" control, a "Universal" control, a "Help and Feedback" control and an "About Us" control may also be displayed on the interface. The "Universal" control is configured to check or manage general parameters of the client, for example, managing a login password. In one example, the user triggers the "Wallet Management" control, for example, clicks on the "Wallet Management" control to enter a management interface of the digital wallet, so as to manage all digital wallets, for example, delete a digital wallet, open a digital wallet, or manage the balance of any digital wallet, etc.

Further, after logging in to the client by using the overseas mobile phone number, the user may create a digital wallet for recording and storing digital currency.

For example, the user clicks on the "Open or Add a Digital Wallet" control, the client enters a digital wallet creation interface as shown in (b) 0 in Fig. 5, identifiers of a plurality of operator systems are displayed on the interface for indicating operator systems capable of providing a wallet service. The user may specify any one operator system among the plurality of operator systems to serve the created digital wallet, for example, the user clicks on an AA bank, then the client creates a digital wallet served by the AA bank, and registers the AA bank as the operator system serving the digital wallet.

It should be noted that the digital wallet may be understood as an electronic bank card served by the AA bank.

It should be noted that the user may create one or more digital wallets on the client, and the one or more digital wallets may be served by the same or different operator systems, which is not limited in the embodiments of the present disclosure.

In some embodiments, after logging in to the client by using the overseas mobile phone number, the created digital wallet may only use the overseas bank card to recharge the digital wallet, which helps to ensure the accuracy of recharging the digital wallet.

It should be noted that, when needing to pay for the domestic transaction order, the user may select any one digital wallet on the client to pay for the domestic transaction order. It is taken as an example for description below that the user selects to use a target digital wallet to pay for the domestic transaction order.

In some embodiments, after selecting the target digital wallet for payment, the user scans a collection code of a merchant by using a "scanning" function on the client, and the client receives a payment operation request in response to a scanning operation for the collection code, wherein the payment operation request is configured to request to use the target digital wallet to pay for the domestic transaction order. By using the "Scan" function on the client, a payment process is started, and the user may start the payment process, which helps to improve the payment efficiency of the digital wallet.

In some other embodiments, after selecting the target digital wallet for payment, the user presents a payment code of the target digital wallet to the merchant, a collection device of the merchant scans the payment code of the client, and the client receives the payment operation request in response to the scanning operation for the payment code of the target digital wallet. By presenting the payment code of the target digital wallet to the user for the scanning of the merchant, the merchant may start the payment process, which helps to smoothly complete the payment when the network is poor.

In some embodiments, after the above step 301, the method further includes: displaying a second interface in response to the payment operation request, wherein the second interface includes a first control, and the first control is configured to instruct to recharge the digital wallet and to pay.

In some embodiments, if the total amount of digital currency in the target digital wallet is insufficient to pay for the domestic transaction order, after receiving the payment operation request, the client displays the second interface in response to the payment operation request, wherein the first control is displayed on the interface. For example, the first control may be a "Recharge and Pay" control configured to prompt the user to recharge the target digital wallet for payment, and if the user selects the first control, it indicates that the user will recharge the target digital wallet and use the digital currency in the target digital wallet for payment.

In the above embodiment, by displaying the second interface, it is helpful to remind the user that the balance in the digital wallet is insufficient to pay for the domestic transaction order, and that the user needs to recharge the digital wallet to continue the payment operation. In addition, by displaying the second interface, it is also possible to display that the user may use the digital wallet for payment without saving money in the digital wallet, for example, when the balance of the digital currency in the digital wallet is insufficient to pay for the domestic transaction order, the user selects the first control on the second interface to recharge the digital wallet and uses the recharged digital wallet for payment, thereby realizing recharging while using, and there is no need to exchange the balance in the overseas bank card into the digital currency.

In some embodiments, after the above step 301, the method further includes: displaying a first interface in response to the payment operation request, wherein the first interface includes a target control, and the target control is configured to instruct to use the overseas bank card to recharge the digital wallet.

In some embodiments, after receiving the payment operation request, the client displays the first interface in response to the payment operation request, the target control is displayed on the first interface. For example, the target control may be "Use an Overseas Bank Card to Recharge" control, which is configured to indicate that a bank card for recharging the digital wallet is an overseas bank card, and if the user selects the target control, it indicates that the user will use the overseas bank card to recharge the digital wallet.

It should be noted that the overseas bank card may be a bank card issued by card organizations such as the VISA, the MasterCard, the Japan Credit Bureau (JCB), etc.

Exemplarily, as shown in Fig. 4, the client displays the first interface, the first interface displays the target control, and the target control is "Use an Overseas Bank Card to Recharge".

In the embodiment, by displaying the first interface, the user is prompted to use the overseas bank card to recharge the digital wallet, which helps the user knows the type of the bank card for recharging the digital wallet in advance, so that the user can prepare for corresponding card information in advance, thereby improving the recharging efficiency. In addition, by displaying the first interface including the target control, the client determines the type of the bank card capable of recharging the digital wallet, so that the step of selecting the type of the bank card by the user can be reduced, thereby improving the efficiency of recharging the digital wallet, and enabling the user to accurately use the overseas bank card for payment.

In some embodiments, the cross-border payment method further includes: displaying a fourth interface after receiving the payment operation request, wherein the fourth interface includes prompt information, and the prompt information is configured to prompt the user to input card information of a bank card for recharging the digital wallet.

In some embodiments, the card information includes a card number, a validity period and a security code of the overseas bank card. For example, the security code may be a card verification value 2 (CVV2) code.

In some embodiments, the prompt information may be text information, for example, please input the card number, the validity period and the security code of the overseas bank card.

In some embodiments, the client displays the fourth interface after receiving the payment operation request, an input area is displayed on the fourth interface, and the user may input, in the input area, the card information of the bank card for recharging the digital wallet. By configuring the input area for the fourth interface, the user inputs the card information of the bank card for recharging the digital wallet, so that there is no need for the user to bind the bank card with the digital wallet, which helps to improve the efficiency of recharging the digital wallet by using the bank card.

In some other embodiments, the client displays the fourth interface after receiving the payment operation request, a control area is displayed on the fourth interface, the control area includes bank card information, and if the control area is selected, it indicates that the user selects to use a bank card corresponding to the bank card information to recharge the digital wallet. The bank card corresponding to the bank card information has been registered as a rechargeable bank card of the digital wallet. By configuring the registered bank card information of the digital wallet for the fourth interface, there is no need for the user to input the card information of the bank card every time when recharging, which helps to improve the efficiency of recharging the digital wallet, thereby improving the payment efficiency of the domestic transaction order.

Step 302: in response to detecting an indication operation of a user, card information of a target overseas bank card that is about to recharge the digital wallet is acquired.

The indication operation is configured to instruct to use the overseas bank card to recharge the digital wallet and to use the digital wallet to pay for the domestic transaction order.

In some embodiments, there is no need for the user to pre-store digital currency in the target digital wallet, that is, the balance in the target digital wallet is zero. When the user needs to pay for the domestic transaction order, the client exchanges digital currency from the account of the overseas bank card and stores the digital currency in the target digital wallet, and the amount of the exchanged digital currency is a transaction amount of the domestic transaction order, that is, the target digital wallet is recharged as needed, then all digital currency in the target digital wallet is used for paying for the domestic transaction order. It can be understood that, after the payment of the domestic transaction order is completed, the balance in the target digital wallet is still zero.

In the embodiment, after the payment operation request is received, the transaction amount of the domestic transaction order may be stored for the digital wallet, and the digital currency stored in the digital wallet is used for paying for the domestic transaction order, thereby implementing recharging the digital wallet as needed and using the recharged digital wallet for payment, that is, implementing recharging as needed, therefore the digital wallet is recharged based on the amount required for an overseas transaction order.

In some embodiments, detecting the indication operation of the user includes: detecting an operation of the user for the target control.

In the embodiment, after it is detected that the user selects to use the overseas bank card to recharge the digital wallet, the card information of the target overseas bank card is acquired, thus helping to improve the efficiency of recharging the digital wallet.

In some other embodiments, detecting the indication operation of the user includes: step 1, displaying a third interface after detecting an operation of the user for the first control, wherein the third interface includes a second control, and the second control is configured to instruct to use the overseas bank card to recharge the digital wallet; and step 2, detecting an operation of the user for the second control.

In the embodiment, after the user selects to recharge the digital wallet for payment, the third interface including the second control is displayed at first, so as to prompt the user to recharge the digital wallet by using the overseas bank card, which helps the user know the type of the bank card for recharging the digital wallet in advance, so that the user can prepare for the corresponding card information in advance, thereby improving the recharging efficiency.

In some embodiments, acquiring the card information of the target overseas bank card includes: detecting an operation for the card information of the target overseas bank card, which is input by the user. The user inputs the card information of the target overseas bank card to recharge the digital wallet, so there is no need for the user to bind the bank card with the digital wallet, which helps to improve the efficiency of recharging the digital wallet by using the bank card.

In some other embodiments, acquiring the card information of the target overseas bank card includes: detecting an operation for the registered target overseas bank card of the digital wallet, which is indicated by the user. By calling the bank card bound with the digital wallet to recharge the digital wallet, there is no need for the user to input the card information of the bank card every time when recharging, which helps to improve the efficiency of recharging the digital wallet, thereby improving the payment efficiency of the domestic transaction order.

In some other embodiments, in a case where the prompt information is displayed on the fourth interface, and the prompt information is configured to prompt the user to input the card information of the bank card for recharging the digital wallet, detecting the indication operation of the user includes: detecting an operation for the card information of the bank card, which is by the user, wherein the input bank card is an overseas bank card. Acquiring the card information of the target overseas bank card includes: acquiring card information of an overseas bank card, which is input by the user. The user inputs the card information of the target overseas bank card to recharge the digital wallet, so there is no need for the user bind the bank card with the digital wallet, which helps to improve the efficiency of recharging the digital wallet by using the bank card.

In some other embodiments, in a case where the prompt information is displayed on the fourth interface, and the prompt information is configured to prompt the user to input the card information of the bank card for recharging the digital wallet, detecting the indication operation of the user includes: detecting an operation for a registered bank card of the digital wallet, which is indicated by the user, wherein the registered bank card is an overseas bank card. Acquiring the card information of the target overseas bank card includes: acquiring card information of the registered overseas bank card of the digital wallet, which is indicated by the user. By using the bank card bound with the digital wallet to recharge the digital wallet, there is no need for the user to input the card information of the bank card every time when recharging, which helps to improve the efficiency of recharging the digital wallet, thereby improving the payment efficiency of the domestic transaction order.

Step 303: a payment request is sent to a first bank server of a target operator system of the digital wallet, so as to request to exchange a currency in the target overseas bank card into a digital currency to recharge the digital wallet, and to use a balance in the digital wallet to pay for the domestic transaction order.

The client installed on the electronic device sends the payment request to the first bank server, so as to request the first bank server to interact with an issuing bank server to recharge the digital wallet by using the currency in the target overseas bank card, and to request the first bank server to use the balance in the digital wallet to pay for the domestic transaction order.

In some embodiments, the payment request includes an exchange amount, and the exchange amount is a payment amount of the domestic transaction order. For example, the payment amount of the domestic transaction order is 5000 RMB, at this time, the payment request is configured to request to use the currency in the overseas bank card to exchange digital currency corresponding to the 5000 RMB, for example, 5000 digital RMB, to store in the digital wallet, and use the 5000 digital RMB in the digital wallet to pay for the domestic transaction order.

In some embodiments, the step 303 includes: acquiring payment password information of the digital wallet, which is input by the user, and sending the payment request to the first bank server of the target operator system, wherein the payment request includes the payment password information and other information.

In some embodiments, the payment request further includes card information of an overseas bank card for payment, for example, at least one of a card number, a validity period and a security code of the overseas bank card, which helps to improve the accuracy of the transaction.

In some embodiments, the payment password information includes a digital password. By means of displaying a password input interface, the client collects the payment password information input by the user. For example, an input area may be displayed on the password input interface, the user inputs a payment password in the input area, and the client acquires the input payment password information of the digital wallet.

In some other embodiments, the payment password information includes a fingerprint password. When the user instructs the client to send the payment request to the first bank server, a finger corresponding to the fingerprint password is placed in an area, in which fingerprint may be collected, on the electronic device, so that the client can acquire the payment password information of the digital wallet of the user.

In the above embodiment, by acquiring the payment password information of the digital wallet, and sending, to the first bank server, the payment request carrying the payment password information, it is helpful to improve the accuracy of the transaction.

Step 304: payment result information sent by the first bank server is received, wherein the payment result information is configured to indicate that the digital wallet has been recharged by using the target overseas bank card and that the transaction order has been paid by using the balance of the digital currency in the digital wallet.

In some implementations, after using the target overseas bank card to recharge the digital wallet and using the balance in the digital wallet to pay for the domestic transaction order, the first bank server returns the payment result information to the client to notify the user that the payment of the domestic transaction order has been completed.

In the step 303 and the step 304, after receiving the payment request, the first bank server uses the target overseas bank card to recharge the digital wallet. During the process of using the target overseas bank card to recharge the digital wallet, the first bank server performs information interaction with the issuing bank server to request the issuing bank server to exchange the account balance of the target overseas bank card into digital currency (such as digital RMB), and after receiving a confirmation exchange instruction of the issuing bank server, the first bank server exchanges the account balance of the target overseas bank card into the digital currency (such as digital RMB), stores the digital currency in the digital wallet, and changes the balance in the digital wallet, thereby recharging the digital wallet, and using the balance of the digital currency in the digital wallet to pay for the domestic transaction order. After completing the foregoing recharging and payment operations, the first bank server sends the payment result to the client.

It should be noted that, during the process of using the target overseas bank card to recharge the digital wallet, the first bank server may multiplex an existing international card acquiring transaction link, so as to exchange the balance in the overseas bank card into digital currency. In the above embodiment, when needing to pay for the domestic transaction order, an overseas user uses an overseas bank card to recharge the digital wallet on the client, so as to exchange the currency in the overseas bank account into digital currency, so that the overseas user can use the digital currency to pay for the domestic transaction order, thereby conveniently implementing online payment for the domestic transaction order by using the overseas bank card, and improving the efficiency of recharging the digital wallet by using the overseas bank card in China and the efficiency of paying for the domestic transaction order.

Therefore, the cross-border payment method provided in the embodiments of the present disclosure provides more exemplary payment modes for the overseas user, which helps to improve the efficiency of recharging the digital wallet by using the overseas bank card in China and the efficiency of paying for the domestic transaction order.

In some embodiments, in combination with Fig. 3, as shown in Fig. 6, before sending the payment request to the first bank server of the target operator system of the digital wallet, the cross-border payment method further includes:
Step 305: a payment verification request is sent to an issuing bank server of the target overseas bank card, wherein the payment verification request is forwarded by the first bank server of the target operator system to the issuing bank server of the target overseas bank card.

The target operator system is any one operator system which is specified by the user from a plurality of operator systems supporting the digital wallet when the digital wallet is created.

It should be noted that the cross-border payment method provided in the embodiments of the present disclosure may verify the domestic transaction order before sending the payment request to the first bank server of the target operator system, thereby improving the accuracy of the transaction of the target overseas bank card.

In some embodiments, the target operator system supports an international card acquiring service (that is, an acquiring service of an overseas bank card). After acquiring the card information of the target overseas bank card that is about to recharge the digital wallet, the client sends the payment verification request to the issuing bank server of the target overseas bank card, so as to request the issuing bank server of the target overseas bank card to verify the domestic transaction order. For example, the payment verification request may be forwarded by the first bank server of the target operator system to the issuing bank server via an international card transaction gateway server to which the target operator system belongs.

In some embodiments, the payment verification request includes at least one of initialization verification, identity verification and check information verification. The initialization verification is to perform verification based on the card information of the target overseas bank card, the identity verification is to perform verification based on device information of an electronic device where the client is located, and the check information verification is to perform verification based on check information filled on an issuing bank verification page by the user.

Step 306: a payment verification result of the payment verification request is received from the issuing bank server of the target overseas bank card, wherein the payment verification result is that the verification is passed.

The payment verification result is forwarded by the issuing bank server to the client via the first bank server of the target operator system.

In some embodiments, after completing the payment verification, the issuing bank server returns the payment verification result to the first bank server, then the first bank server sends the payment verification result to the client, and the client executes the next operation after receiving the payment verification result from the issuing bank server. For example, in a case where the payment verification result is that the verification is passed, the client sends the payment request to the first bank server of the target operator system of the digital wallet.

In the above embodiment, before sending the payment request to the first bank server of the target operator system of the digital wallet, the payment verification request is first sent to the issuing bank server of the target overseas bank card, so as to request the issuing bank server to verify the domestic transaction order, which helps to improve the accuracy of the transaction of the target overseas bank card.

In addition, compared with general cases in which different operator systems and issuing banks of overseas bank cards perform payment verification based on different payment verification processes, in the cross-border payment method provided in the embodiments of the present disclosure, by performing abstraction and integration on the payment verification process and performing unified integration on interaction interfaces in the payment verification process, for different target operator systems, the client uniformly initiates, by means of a unified interface, the payment verification request to the issuing bank server of the target overseas bank card. The first bank server of the target operator system serving the digital wallet forwards the payment verification request to the issuing bank server, so that different operator systems and different overseas bank issuing banks can perform payment verification based on the same payment verification process, therefore there is no need to separately configure a set of payment verification process for each operator system serving the digital wallet, thereby simplifying the payment verification process of recharging the digital wallet, and thus improving the working efficiency.

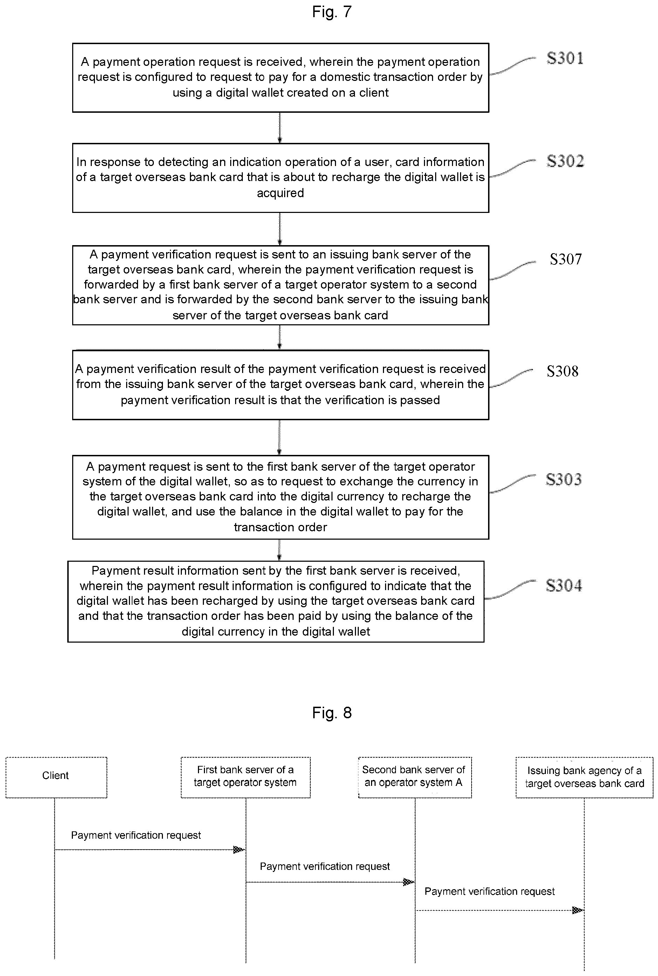

In some embodiments, in combination with Fig. 3, as shown in Fig. 7, before sending the payment request to the first bank server of the target operator system of the digital wallet, the cross-border payment method further includes:
Step 307: a payment verification request is sent to the issuing bank server of the target overseas bank card, wherein the payment verification request is forwarded by the first bank server of the target operator system to a second bank server and is forwarded by the second bank server to the issuing bank server of the target overseas bank card.

An operator system to which the second bank server belongs supports the international card acquiring service. The target operator system is any one operator system which is specified by the user from a plurality of operator systems supporting the digital wallet when the digital wallet is created.

It should be noted that in the cross-border payment method provided in the embodiments of the present disclosure, before the payment request is sent to the first bank server of the target operator system, the domestic transaction order may be verified, thereby improving the accuracy of the transaction of the target overseas bank card.

In some embodiments, the target operator system does not support the international card acquiring service, that is, the digital wallet served by the target operator system cannot collect a foreign exchange fund transferred by the user from the target overseas bank card into the digital wallet. On this basis, in the embodiments of the present disclosure, by allowing the first bank server of the target operator system to perform service transfer, the target operator system may establish cooperation with an operator system A (the operator system supports the international card acquiring service), and the payment verification request, which is received by the first bank server from the client, is forwarded to the issuing bank server by the second bank server of the operator system A, so as to complete the payment verification of the domestic transaction order. Further, based on the server transfer, the target operator system may complete an operation of recharging the digital wallet from the overseas bank card via the operator system A.

Exemplarily, as shown in Fig. 8, the first bank server of the target operator system may receive the payment verification request sent by the client, then the first bank server may send the payment verification request to the second bank server of the operator system A, and the second bank server may send the payment verification request to the issuing bank server of the target overseas bank card.

In some embodiments, after acquiring the card information of the target overseas bank card that is about to recharge the digital wallet, the client sends the payment verification request to the issuing bank server of the target overseas bank card, so as to request the issuing bank server of the target overseas bank card to verify the domestic transaction order. For example, the payment verification request may be sent by the first bank server of the target operator system to the second bank server of the cooperative operator system, and is forwarded by the second bank server to the issuing bank server via an international card transaction gateway server to which the cooperative operator system belongs.

Step 308: a payment verification result of the payment verification request is received from the issuing bank server of the target overseas bank card, wherein the payment verification result is that the verification is passed.

The payment verification result is sent by the issuing bank server to the first bank server of the target operator system, and is forwarded by the first bank server to the client via the second bank server.

In some embodiments, after completing the payment verification, the issuing bank server returns the payment verification result to the second bank server. Then, the second bank server sends the payment verification result to the first bank server, and the first bank server sends the payment verification result to the client. After receiving the payment verification result from the issuing bank server, the client executes the next operation. For example, in a case where the payment verification result is that the verification is passed, the client sends the payment request to the first bank server of the target operator system of the digital wallet.

In the above embodiment, before sending the payment request to the first bank server of the target operator system of the digital wallet, the payment verification request is first sent to the issuing bank server of the target overseas bank card, so as to request the issuing bank server to verify the domestic transaction order, which helps to improve the transaction accuracy of the target overseas bank card.

Further, in the cross-border payment method provided in the embodiments of the present disclosure, by allowing the first bank server of the target operator system to perform service transfer, the target operator system may forward the payment verification request to the issuing bank server via the second bank server of the cooperative operator system thereof, so as to complete the current payment verification. Based on the same principle, the subsequent international card acquiring service is completed (that is, the currency in the target overseas bank card is exchanged into digital currency to recharge the digital wallet), thereby being helpful to introduce more operator systems for providing the digital wallet, so that an operator system that does not support the international card acquiring service can also serve the digital wallet of the overseas user, thereby providing more choices for the user.

In addition, by performing abstraction and integration on the payment verification process, the client initiates the payment verification request to the issuing bank server of the target overseas bank card, the first bank server of the target operator system serving the digital wallet, and the second bank server of the operator system cooperating with the target operator system forward the payment verification request to the issuing bank server, so that different operator systems and issuing banks of overseas bank cards can perform payment verification based on the same payment verification process, thereby simplifying the payment verification process of recharging the digital wallet, and thus improving the working efficiency.

It should be noted that the payment verification in the embodiments of the present disclosure may be 3DS (3-Domain Secure) payment verification. Certainly, the payment verification may also be other payment verification services for cross-border transactions, which is not limited in the embodiments of the present disclosure. The payment verification process provided in the embodiments of the present disclosure is described below by taking it as an example that the payment verification is 3DS payment verification.

In some embodiments, sending the payment verification request to the issuing bank server of the target overseas bank card includes: sending an initialization verification request to the issuing bank server of the target overseas bank card, wherein the initialization verification request includes card information of the overseas bank card.

In some embodiments, after acquiring the card information of the target overseas bank card that is about to recharge the digital wallet, the client sends the initialization verification request to the issuing bank server of the target overseas bank card, so as to request the issuing bank server to perform initialization verification on the domestic transaction order based on the card information of the target overseas bank card. After receiving the initialization verification request, the issuing bank server performs initialization verification based on the card information of the target overseas bank card. The initialization verification is used for verifying whether the domestic transaction order supports 3DS payment verification.

In one example, in a case where both transaction parties corresponding to the domestic transaction order open a 3DS payment verification service, the issuing bank server confirms that the domestic transaction order supports 3DS payment verification. The both transaction parties corresponding to the transaction order are an overseas bank card and a merchant, and both transaction parties corresponding to a transaction of recharging the digital wallet are an overseas bank card and a target operator system serving the digital wallet. In addition, the initialization verification may further include merchant information and/or information of the target operator system, so that the issuing bank server judged, based on the merchant information, whether the merchant corresponding to the domestic transaction order has opened the 3DS payment verification service, and judges, based on the information of the target operator system, whether the digital wallet (or the target operator system) supports the 3DS payment verification service.

In another example, in a case where the target overseas bank card opens the 3DS payment verification service, the issuing bank server confirms that the domestic transaction order supports 3DS payment verification.

It should be noted that, if confirming that the domestic transaction order does not support the 3DS payment verification service, the issuing bank server refuses to use the target overseas bank card to continue the transaction. If confirming that the domestic transaction order supports the 3DS payment verification service, the issuing bank server continues to propel the transaction process, for example, continues to perform identity verification and check information verification.

In some embodiments, after confirming a verification result of the initialization verification, the issuing bank server returns the verification result to the server that sends the initialization verification thereto, for example, the first bank server or the second bank server, so that the first bank server or the second bank server sends the verification result to the client.

In the above embodiment, before collecting device information of the client for identity verification, initialization verification is performed on the overseas bank card at first, on one hand, it is helpful to confirm whether the domestic transaction order supports the payment verification service, so that subsequent verification is performed when it is confirmed that the payment verification service is supported, and it can be determined that the payment verification request sent by the client can be executed. On the other hand, the initialization verification and identity verification are simultaneously executed on the domestic transaction order, which also helps to improve the accuracy of payment verification.

In some embodiments, sending the payment verification request to the issuing bank server of the target overseas bank card includes: sending an identity verification request to the issuing bank server of the target overseas bank card, wherein the identity verification request includes transaction environment information of the domestic transaction order.

In some embodiments, the transaction environment information includes device information of the electronic device where the client is located, and user identity information. The device information may include a device model number, a version number of a device system, a CPU model number of the device, and the like. The user identity information may include fingerprint information, facial information, pupil information and the like of the user.

In some embodiments, after acquiring the card information of the target overseas bank card that is about to recharge the digital wallet, the client sends the identity verification request to the issuing bank server of the target overseas bank card, so as to request the issuing bank server to perform identity verification based on the transaction environment information. In some other embodiments, in a case where the verification result of the initialization verification request is that the verification is passed, the client sends the identity verification request to the issuing bank server of the target overseas bank card, so as to request the issuing bank server to perform identity verification based on the device information.

It should be noted that the identity verification is used for verifying whether the identity of the current electronic device and/or the current user executing the domestic transaction order meets requirements, for example, whether the current electronic device and/or the current user executing the domestic transaction order is the same as a historical electronic device and/or a historical user executing a historical transaction of the target overseas bank card.

In some embodiments, only when the identities of both the electronic device and the user meet the requirements, that is, in a case where the current electronic device is the same as the historical electronic device, and the current user is also the same as the historical user, it is confirmed that the verification result of the identity verification request is that the verification is passed, and otherwise, the verification fails. In some other embodiments, when the identity of one of the electronic device or user meets the requirements, that is, in a case where the current electronic device is the same as the historical electronic device, or the current user is the same as the historical user, it is confirmed that the verification result of the identity verification request is passed, and otherwise, the verification fails.

In some embodiments, the client collects the transaction environment information. In some other embodiments, the verification result of the initialization verification request returned by the issuing bank server carries a form from which the environment information may be acquired, and after receiving the form, the client collects the transaction environment information of the domestic transaction order from the form.

In some embodiments, after confirming the verification result of the identity verification request, the issuing bank server returns the verification result to the server that sends the initialization verification thereto, for example, the first bank server or the second bank server, so that the first bank server or the second bank server sends the verification result to the client.

In some embodiments, only when the verification result of the identity verification request is that the verification fails, the check information verification is performed, which helps to shorten the payment verification process and improve the payment verification efficiency, thereby improving the transaction efficiency. In some other embodiments, regardless of whether the verification result of the identity verification request is that the verification is passed or the verification fails, the check information verification is performed, which helps to improve the accuracy of payment verification.

In the above embodiment, by sending, to the issuing bank server, the environment information carrying the domestic transaction order, the issuing bank server is requested to perform identity verification on the domestic transaction order, which helps the issuing bank server to judge whether the identity of an executor (the electronic device and/or the user) of the domestic transaction order meets the requirements, so as to judge whether to continue to propel a transaction corresponding to the domestic transaction order, thereby ensuring the accuracy of the transaction corresponding to the domestic transaction order.

In some embodiments, sending the payment verification request to the issuing bank server of the target overseas bank card includes:
Step 1: an issuing bank verification interface of the target overseas bank card is displayed, and check information input by the user on the issuing bank verification interface is acquired.

In some embodiments, the client acquires the issuing bank verification interface of the overseas bank card from the issuing bank server, and performs interface rendering on the client. After completing the interface rendering, the client displays the issuing bank verification interface of the overseas bank card, and the issuing bank verification interface is used for the user to collect verification information, so as to verify the domestic transaction order.

In some embodiments, an input area is displayed on the issuing bank verification interface, the input area is configured to instruct the user to fill in check information, and the check information is check information reserved by the user in the issuing bank of the overseas bank card. Therefore, if the check information filled in by the user on the issuing bank verification page is correct, the verification result of verifying the check information by the issuing bank server is that the verification is passed.

Step 2: a check information verification request is sent to the issuing bank server of the target overseas bank card, wherein the check information verification request includes check information input by the user on the issuing bank verification interface of the overseas bank card.

In some embodiments, after filling in the check information on the issuing bank verification interface, the user submits the check information to the issuing bank server, and requests the issuing bank server to verify the domestic transaction order based on the check information. The issuing bank server may directly acquire the domestic transaction order from the issuing bank verification interface and verify the check information.

In some other embodiments, after filling in the check information on the issuing bank verification interface, the user submits the check information to the issuing bank server. In addition, the client also sends a query request to the issuing bank server for querying a check result of the check information by the issuing bank server. By actively sending the query request, the check result of the check information is queried instead of waiting for the issuing bank server to return the check result, which helps to more quickly acquire the check result, thereby improving the transaction efficiency.

It should be noted that the query request may be forwarded by the first bank server to the issuing bank server, or is sent by the first bank server to the second bank server, and is forwarded by the second bank server to the issuing bank server.

In the above embodiment, the payment verification further includes check information verification, so that the domestic transaction order can be verified based on the check information reserved by the user in the issuing bank, which helps to improve the transaction accuracy.

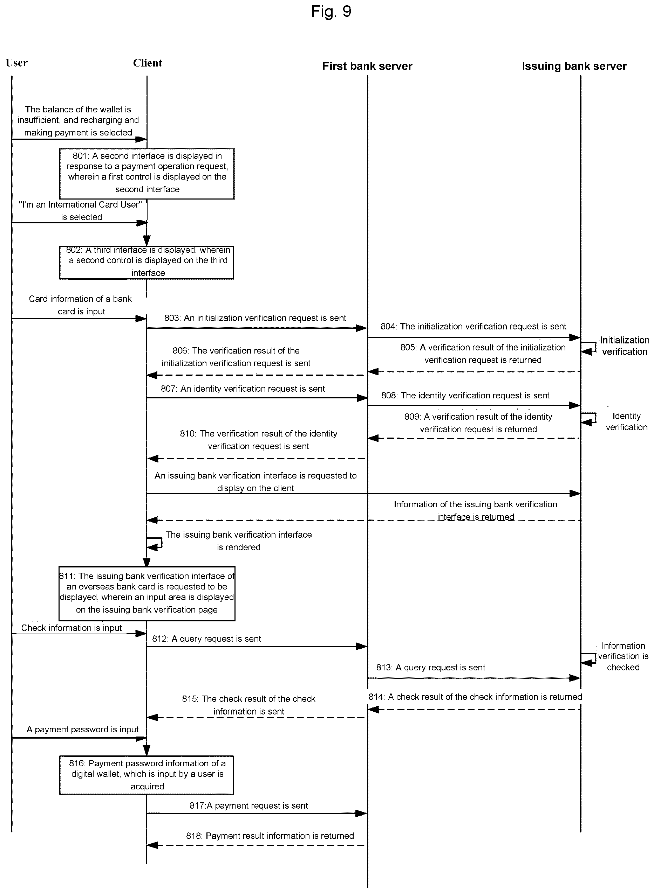

Fig. 9 is a schematic interaction diagram illustrating a cross-border payment method according to an exemplary embodiment, and the method is applied to an electronic device, a first bank server and an issuing bank server. The method includes the following steps.

Step 801: a client displays a second interface in response to a payment operation request, wherein a first control is displayed on the second interface.

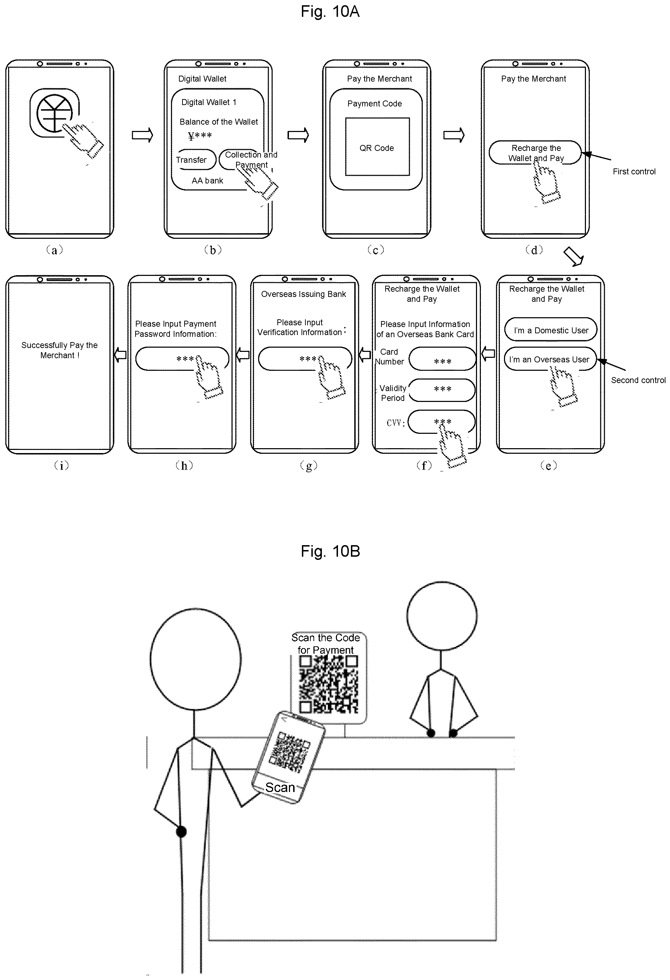

In some embodiments, the user logs in to the client on the electronic device, for example, as shown in (a) in Fig. 10A, the user clicks on the client on the electronic device to log in to the client.

In some examples, after logging in to the client, the user selects a digital wallet for paying for a domestic transaction order, for example, as shown in (b) in Fig. 10A, the user selects a digital wallet 1 for paying for the domestic transaction order, and clicks on a "Collection and Payment" control on the interface of the digital wallet 1. Then, the client displays a payment code of the digital wallet 1, for example, as shown in (c) in Fig. 10A, a collection device of a merchant scans the payment code on the client. In another example, after logging into the client, as shown in Fig. 10B, the user selects a "Scanning" function on the client to scan a collection code of the merchant.

Then, when the balance of digital currency in the digital wallet is insufficient to pay for the domestic transaction order, the client displays a second interface, for example, the second interface is as shown in (d) in Fig. 10A, and a "Recharge the Wallet and Pay" control (i.e., the first control) is displayed on the second interface for instructing to recharge the digital wallet and to pay.

Step 802: the client displays a third interface, wherein a second control is displayed on the third interface.

In some embodiments, after detecting an operation of the user selecting the "Recharge the Wallet and Pay" control, the client displays the third interface, for example, the third interface is as shown in (e) in Fig. 10A, and the second control may be "I'm an international card user", which is configured to instruct to use an overseas bank card to recharge the digital wallet.

In some embodiments, after the user selects the second control, the client displays a fourth interface, for example, the fourth interface is as shown in (f) in Fig. 10A, and the user may input card information of the overseas bank card on the interface.

With regard to other methods for acquiring the card information of the overseas bank card, reference may be made to the description in the step 301, and thus details are not described herein again.

Step 803: the client sends an initialization verification request to the first bank server.

The initialization verification request includes the card information of the overseas bank card.

In some embodiments, after acquiring the card information of the overseas bank card, the client sends the initialization verification request to the first bank server, and instructs the first bank server to send the initialization verification to an issuing bank server, so as to request the issuing bank server to perform initialization verification on a domestic transaction order.

Step 804: the first bank server sends the initialization verification request to the issuing bank server.

In some embodiments, after receiving the initialization verification request sent by the client, the first bank server sends the initialization verification request to the issuing bank server, so as to request the issuing bank server to perform initialization verification on check information.

Step 805: the issuing bank server returns a verification result of the initialization verification request to the first bank server.

In some embodiments, the issuing bank server receives the initialization verification request and performs initialization verification on the domestic transaction order, and after obtaining the verification result of the initialization verification request, the issuing bank server returns the verification result to the first bank server.

Step 806: the first bank server sends the verification result of the initialization verification request to the client.

In some embodiments, after receiving the verification result of the initialization verification request, the first bank server sends the verification result to the client.

Step 807: the client sends an identity verification request to the first bank server.

The identity verification request includes device information of the electronic device.

In some embodiments, after the client receives the verification result of the initialization verification request, if the verification result is that the verification is passed, the client collects the device information of the electronic device. In addition, the client further sends the identity verification request to a second bank server, and instructs the second bank server to send the verification request to the first bank server, so as to request the first bank server to perform identity verification on the domestic transaction order.

Step 808: the first bank server sends the identity verification request to the issuing bank server.

In some embodiments, after receiving the identity verification request, the first bank server sends the identity verification request to the issuing bank server, so as to request the issuing bank server to perform identity verification on the domestic transaction order.

Step 809: the issuing bank server returns a verification result of the identity verification request to the first bank server.

In some embodiments, after receiving the identity verification request, the issuing bank server performs risk judgment based on transaction environment information carried in the identity verification request, and if it is judged that a transaction behavior of the domestic transaction order is inconsistent with a daily transaction behavior of a cardholder, for example, the transaction environment information of the domestic transaction order is inconsistent with the transaction environment information of a historical transaction of the cardholder, it is considered that the domestic transaction order is a risk transaction, and the domestic transaction order is intercepted. If it is judged that the transaction behavior of the domestic transaction order is consistent with the daily transaction behavior of the cardholder, the propulsion of the transaction may be allowed to be continued. Further, the issuing bank server further returns the verification result of the identity verification request to the first bank server.

Step 810: the first bank server sends the verification result of the identity verification request to the client.

In some embodiments, after receiving the verification result of the identity verification request, the first bank server sends the verification result to the client.

Step 811: the client displays an issuing bank verification interface of the overseas bank card, wherein an input area is displayed on the issuing bank verification page.

In some embodiments, after receiving the verification result of the identity verification request, the client acquires the issuing bank verification interface of the overseas bank card, and displays the issuing bank verification interface after the client completes rendering, for example, the issuing bank verification interface is shown in (g) in Fig. 10A. The input area is displayed on the issuing bank verification interface for instructing the user to fill in check information, wherein the check information includes reservation information and/or a short message verification code of the user in an issuing bank.

Step 812: the client sends a query request to the first bank server.

In some embodiments, after the client submits, to the issuing bank server, the issuing bank verification interface where the user fills in the check information, the client further sends the query request to the issuing bank server for requesting to query a check result obtained by checking the check information on the issuing bank verification interface by the issuing bank server.

Step 813: the first bank server sends the query request to the issuing bank server.

In some embodiments, after receiving the query request, the first bank server sends the query request to the issuing bank server.

Step 814: the issuing bank server returns a check result of the check information to the first bank server.

In some embodiments, after receiving the query request, the issuing bank server returns the check result of the check information to the first bank server.

Step 815: the first bank server sends the check result of the check information to the client.

In some embodiments, after receiving the check result of the check information, which is returned by the issuing bank server, the first bank server sends the check result to the client.

Step 816: the client acquires payment password information of the digital wallet, which is input by the user.

In some embodiments, the client displays a password input interface, for example, the password input interface is as shown in (h) in Fig. 10A, and the user inputs a payment password on the password input interface.

With regard to other manners of the client acquiring the payment password information, reference may be made to the description in the step 303, and thus details are not described herein again.

Step 817: the client sends a payment request to the first bank server for requesting to use currency in the overseas bank card to recharge the digital wallet and to use the balance in the digital wallet for payment.

In some embodiments, after acquiring the payment password of the digital wallet, the client sends the payment request to the first bank server for requesting the first bank server to use the currency in the overseas bank card to recharge the digital wallet and to use the balance in the digital wallet for payment.

It should be noted that the payment request is configured to request to continuously execute two operations of recharging the digital wallet and using the digital currency in the digital wallet to pay for the domestic transaction order.

Step 818: the first bank server returns payment result information of the payment request to the client.

In some embodiments, after receiving the payment request sent by the client, the first bank server uses the currency in the overseas bank card to recharge the digital wallet and pay for the domestic transaction order. After the domestic transaction order is paid, the payment result information is returned to the client. The client displays a payment result interface, for example, the payment result interface is shown in (i) in Fig. 10A.

The solutions provided in the embodiments of the present disclosure are mainly described above from the perspective of method. To implement the above functions, a cross-border payment apparatus or an electronic device includes corresponding hardware structures and/or software modules for executing the functions. Those skilled in the art should easily be aware that, in combination with the units and algorithm steps of the examples described in the embodiments disclosed herein, the embodiments of the present disclosure may be implemented by hardware or in a combined form of hardware and computer software. Whether a certain function is executed by hardware or in a manner of driving hardware by computer software depends on particular applications and design constraint conditions of the technical solutions. Those skilled in the art may use different methods to implement the described functions for each particular application, but this implementation should not be considered as exceeding the scope of the embodiments of the present disclosure.

In the embodiments of the present disclosure, functional modules of the cross-border payment apparatus or the electronic device may be divided exemplarily according to the above method, for example, the cross-border payment apparatus or the electronic device may include various functional modules corresponding to various function divisions, or two or more functions may be integrated into one processing module. The integrated module may be implemented in the form of hardware, and may also be implemented in the form of a software functional module. It should be noted that the division of the modules in the embodiments of the present disclosure is schematic, and is merely a logical function division, and there may be other division manners in actual implementations.

For example, an embodiment of the present disclosure further provides a cross-border payment apparatus.

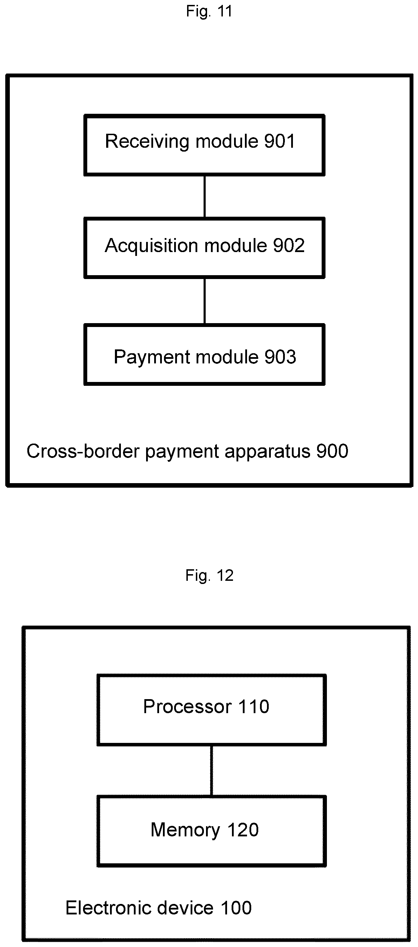

Fig. 11 is a block diagram illustrating a cross-border payment apparatus according to some embodiments. Referring to Fig. 11, the cross-border payment apparatus 900 includes a receiving module 901, an acquisition module 902 and a payment module 903.

The receiving module 901 is configured to receive a payment operation request, wherein the payment operation request is configured to request to pay for a domestic transaction order by using a digital wallet created on a client. For example, in combination with Fig. 3, the receiving module 901 may be configured to execute the step 301.

The acquisition module 902 is configured to: in response to detecting an indication operation of a user, acquire card information of a target overseas bank card that is about to recharge the digital wallet, wherein the indication operation is configured to instruct to use the overseas bank card to recharge the digital wallet and to use the digital wallet to pay for the domestic transaction order. For example, in combination with Fig. 3, the acquisition module 902 may be configured to execute the step 302.

The payment module 903 is configured to send a payment request to a first bank server of a target operator system of the digital wallet, so as to request to exchange currency in the target overseas bank card into digital currency to recharge the digital wallet, and use the balance in the digital wallet to pay for the domestic transaction order. For example, in combination with Fig. 3, the payment module 903 may be configured to execute the step 303.

The receiving module 901 is further configured to receive payment result information sent by the first bank server, wherein the payment result information is configured to indicate that the digital wallet has been recharged by using the target overseas bank card and that the domestic transaction order has been paid by using the digital wallet. For example, in combination with Fig. 3, the receiving module 901 may be further configured to execute the step 303.

In one possible implementation, before sending the payment request to the first bank server of the target operator system of the digital wallet, the payment module 903 is further configured to: send a payment verification request to an issuing bank server of the target overseas bank card, wherein the payment verification request is forwarded by the first bank server of the target operator system to the issuing bank server of the target overseas bank card, the payment verification request is configured to request the issuing bank server of the target overseas bank card to verify the domestic transaction order, the target operator system is any one operator system which is specified by the user from a plurality of operator systems supporting a digital wallet service when the digital wallet is created, and the target operator system supports an international card acquiring service; and receive a payment verification result of the payment verification request from the issuing bank server of the target overseas bank card, wherein the payment verification result is forwarded by the issuing bank server to the client via the first bank server.

In another possible implementation, before sending the payment request to the first bank server of the target operator system of the digital wallet, the payment module 903 is further configured to: send a payment verification request to the issuing bank server of the target overseas bank card, wherein the payment verification request is forwarded by the first bank server of the target operator system to a second bank server and is forwarded by the second bank server to the issuing bank server of the target overseas bank card, the payment verification request is configured to request the issuing bank server of the target overseas bank card to verify the domestic transaction order, the target operator system is any one operator system which is specified by the user from a plurality of operator systems supporting a digital wallet service when the digital wallet is created, and an operator system to which the second bank server belongs supports an international card acquiring service; and receive a payment verification result of the payment verification request from the issuing bank server of the target overseas bank card, wherein the payment verification result is sent by the issuing bank server to the first bank server of the target operator system and is forwarded by the first bank server to the client via the second bank server.

In another possible implementation, the payment module 903 is configured to: send an identity verification request to the issuing bank server of the target overseas bank card, wherein the identity verification request includes transaction environment information of the domestic transaction order, and the identity verification request is configured to request the issuing bank server to perform identity verification on the domestic transaction order based on the transaction environment information.

In another possible implementation, the payment module 903 is configured to: display an issuing bank verification interface of the target overseas bank card, and acquire check information input by the user on the issuing bank verification interface; and send a check information verification request to the issuing bank server of the target overseas bank card, wherein the check information verification request includes check information input by the user on the issuing bank verification interface, and the check information verification request is configured to request the issuing bank server to check the domestic transaction order based on the check information.

In another possible implementation, the payment module 903 is configured to: send an initialization verification request to the issuing bank server of the target overseas bank card, wherein the initialization verification request includes card information of the target overseas bank card, and the initialization verification request is configured to request the issuing bank server to perform initialization verification on the domestic transaction order based on the card information of the target overseas bank card.

In another possible implementation, the payment module 903 is configured to: acquire payment password information of the digital wallet, which is input by the user, and send the payment request to the first bank server of the target operator system, wherein the payment request includes the payment password information.

In another possible implementation, the payment module 903 is further configured to: display a first interface in response to the payment operation request, wherein the first interface includes a target control, and the target control is configured to instruct to use the overseas bank card to recharge the digital wallet and to pay; and the payment module 903 is further configured to: detect an operation of the user for the target control.

In another possible implementation, the payment module 903 is further configured to: display a second interface in response to the payment operation request, wherein the second interface includes a first control, and the first control is configured to instruct to recharge the digital wallet and to pay; and the payment module 903 is further configured to: display a third interface after detecting an operation of the user for the first control, wherein the third interface includes a second control, and the second control is configured to instruct to use the overseas bank card to recharge the digital wallet; and detect an operation of the user for the second control.

In another possible implementation, the acquisition module 902 is configured to: detect an operation for the card information of the target overseas bank card, which is input by the user; or detect an operation for the registered target overseas bank card of the digital wallet, which is indicated by the user.

In another possible implementation, the payment module 903 is further configured to: display a fourth interface after receiving the payment operation request, wherein the fourth interface includes prompt information, and the prompt information is configured to prompt the user to input card information of a bank card which recharges the digital wallet for payment; the payment module 903 is further configured to: detect an operation for the card information of the bank card, which is input by the user, wherein the input bank card is an overseas bank card; or, detect an operation for a registered bank card of the digital wallet, which is indicated by the user, wherein the registered bank card is an overseas bank card; and the acquisition module 902 is configured to: acquire card information of the overseas bank card, which is input by the user; or acquire card information of the registered overseas bank card of the digital wallet, which is indicated by the user.

In another possible implementation, the receiving module 901 is configured to: receive the payment operation request in response to a code scanning operation for a collection code; or receive the payment operation request in response to a code scanned operation for a payment code of the digital wallet.

The specific manners in which the modules of the apparatus in the above embodiments execute operations have been described in detail in the embodiments related to the method, and thus details are not described herein again.

Fig. 12 is a block diagram illustrating an electronic device according to some embodiments. As shown in Fig. 12, the electronic device 100 includes, but is not limited to, a processor 110 and a memory 120.

The memory 120 is configured to store an executable instruction of the processor 110. It can be understood that the processor 110 is configured to execute the instruction to implement the cross-border payment method in the above embodiments.

It should be noted that, those skilled in the art can understand that the structure of the electronic device shown in Fig. 12 does not constitute a limitation on the electronic device, and the electronic device may include more or fewer components than those shown in Fig. 12, or combine some components, or have different component arrangements.

The processor 110 is a control center of the electronic device, which connects various parts of the entire electronic device by using various interfaces and circuits, and executes various functions and processes data of the electronic device by running or executing software programs and/or modules stored in the memory 120, and invoking data stored in the memory 120, so as to perform overall monitoring on the electronic device. The processor 110 may include one or more processing units. In some embodiments, the processor 110 may integrate an application processor and a modem processor, wherein the application processor mainly processes an operating system, a user interface, an application, and the like, and the modem processor mainly processes wireless communications. It can be understood that the above modem processor may also be not integrated into the processor 110.

The memory 120 may be configured to store software programs and various data. The memory 120 may mainly include a program storage area and a data storage area, wherein the program storage area may store an operating system, applications (for example, the receiving module, the acquisition module, the payment module, and the like) required by at least one functional module, etc. In addition, the memory 120 may include a high-speed random access memory, and may further include a non-volatile memory, for example, at least one magnetic disk storage device, a flash memory device, or other volatile solid-state storage devices.

In an exemplary embodiment, further provided is a computer-readable storage medium (for example, a non-transitory computer-readable storage medium) including an instruction, for example, a memory 120 including an instruction, wherein the instruction may be executed by the processor 110 of the electronic device 100 to implement the cross-border payment method in the above embodiments.

In practical implementations, the processing functions of the receiving module 901, the acquisition module 902 and the payment module 903 may be implemented by the processor 110 in Fig. 12 by means of invoking a computer program stored in the memory 120. For an execution process, reference may be made to the description of the cross-border payment method in the above embodiments, and thus details are not described herein again.

In some embodiments, the computer-readable storage medium may be a non-transitory computer-readable storage medium, for example, the non-transitory computer-readable storage medium may be a read-only memory (ROM), a random access memory (RAM), a CD-ROM, a magnetic tape, a floppy disk, an optical data storage device, etc.

In an exemplary embodiment, an embodiment of the present disclosure further provides a computer program product including one or more instructions, wherein the one or more instructions may be executed by the processor 110 of the electronic device 100 to complete the cross-border payment method in the above embodiments.

It should be noted that, when the instruction in the computer-readable storage medium or when the one or more instructions in the computer program product are executed by the processor 110 of the electronic device 100, various processes of the above embodiments of the cross-border payment method are implemented, and the same technical effects as the cross-border payment method described above may be achieved, thus details are not described herein again to avoid repetition.

From the description of the above implementations, those skilled in the art to which the present disclosure belongs may clearly understand that, for the purpose of convenient and brief description, only the division of the above functional modules is used for illustration, and in actual applications, the above functions may be completed by different functional modules according to needs, that is, the internal structure of the apparatus is divided into different functional modules to complete all or some functions as described above.

In some embodiments of the present disclosure, it should be understood that the disclosed apparatus and method may be implemented in other manners. For example, the apparatus embodiments described above are merely exemplary, for example, the division of modules or units is only a logical function division, there may be other division manners in practical implementations, for example, a plurality of units or components may be combined or integrated to another apparatus, or some features may be omitted or not executed. From another point of view, the displayed or discussed mutual coupling or direct coupling or communication connection may be indirect coupling or communication connection of apparatuses or units through some interfaces, and may be in electrical, mechanical or other forms.

Units described as separate components may be separated physically or not, components displayed as units may be one or more physical units, namely, may be located in one place, or may be distributed to a plurality of different places. A part of or all of the units may be selected to implement the payment method in the solution of the present embodiment according to actual demands.

In addition, the functional units in various embodiments of the present disclosure may be integrated in one processing unit, or the units individually exist physically, or two or more units are integrated into one unit. The integrated unit may be implemented in the form of hardware, and may also be implemented in the form of a software functional unit.

If the integrated unit is implemented in the form of the software functional unit and is sold or used as an independent product, it may be stored in a readable storage medium. Based on this understanding, the technical solutions of the embodiments of the present disclosure substantially, or the part contributing to the prior art, or part of or all the technical solutions may be implemented in the form of a software product, the software product is stored in a storage medium, and includes several instructions for enabling one device (which may be a single chip microcomputer, a chip or the like) or a processor to execute all or part of the steps of the method in various embodiments of the present disclosure. The foregoing storage medium includes a variety of media capable of storing program codes, such as a USB disk, a mobile hard disk, an ROM, an RAM, a magnetic disk, or an optical disk, etc.

The foregoing descriptions are merely specific implementations of the embodiments of the present disclosure, but the protection scope of the embodiments of the present disclosure is not limited thereto. Any modifications or replacements, made within the technical scope disclosed in the embodiments of the present disclosure, shall all fall within the protection scope of the embodiments of the present disclosure. Therefore, the protection scope of the embodiments of the present disclosure should be subject to the protection scope of the claims.

## Claims

1. A cross-border payment method, comprising:
receiving a payment operation request, wherein the payment operation request is configured to request to pay for a domestic transaction order by using a digital wallet created on a client;
in response to detecting an indication operation of a user, acquiring card information of a target overseas bank card that is about to recharge the digital wallet, wherein the indication operation is configured to instruct to use an overseas bank card to recharge the digital wallet and to use the digital wallet to pay for the domestic transaction order;
sending a payment request to a first bank server of a target operator system of the digital wallet, so as to request to exchange a currency in the target overseas bank card into a digital currency to recharge the digital wallet;
using a balance in the digital wallet to pay for the domestic transaction order; and
receiving payment result information sent by the first bank server, wherein the payment result information is configured to indicate that the digital wallet has been recharged by using the target overseas bank card and that the domestic transaction order has been paid by using the digital wallet.

2. The method as claimed in claim 1, wherein before sending the payment request to the first bank server of the target operator system of the digital wallet, the method further comprises:
sending a payment verification request to an issuing bank server of the target overseas bank card, wherein the payment verification request is forwarded by the first bank server of the target operator system to the issuing bank server of the target overseas bank card, the payment verification request is configured to request the issuing bank server of the target overseas bank card to verify the domestic transaction order, the target operator system is any one operator system which is specified by the user from a plurality of operator systems supporting a digital wallet service when the digital wallet is created, and the target operator system supports an international card acquiring service; and
receiving a payment verification result of the payment verification request from the issuing bank server of the target overseas bank card, wherein the payment verification result is forwarded by the issuing bank server to the client via the first bank server.

3. The method as claimed in claim 1, wherein before sending the payment request to the first bank server of the target operator system of the digital wallet, the method further comprises:
sending a payment verification request to the issuing bank server of the target overseas bank card, wherein the payment verification request is forwarded by the first bank server of the target operator system to a second bank server and is forwarded by the second bank server to the issuing bank server of the target overseas bank card, the payment verification request is configured to request the issuing bank server of the target overseas bank card to verify the domestic transaction order, the target operator system is any one operator system which is specified by the user from a plurality of operator systems supporting a digital wallet service when the digital wallet is created, and an operator system to which the second bank server belongs supports an international card acquiring service; and
receiving a payment verification result of the payment verification request from the issuing bank server of the target overseas bank card, wherein the payment verification result is sent by the issuing bank server to the first bank server of the target operator system and is forwarded by the first bank server to the client via the second bank server.

4. The method as claimed in claim 2 or 3, wherein sending the payment verification request to the issuing bank server of the target overseas bank card comprises:
sending an identity verification request to the issuing bank server of the target overseas bank card, wherein the identity verification request comprises transaction environment information of the domestic transaction order, and the identity verification request is configured to request the issuing bank server to perform identity verification on the domestic transaction order based on the transaction environment information.

5. The method as claimed in claim 4, wherein sending the payment verification request to the issuing bank server of the target overseas bank card further comprises:
displaying an issuing bank verification interface of the target overseas bank card, and acquiring check information input by the user on the issuing bank verification interface; and
sending a check information verification request to the issuing bank server of the target overseas bank card, wherein the check information verification request comprises the check information input by the user on the issuing bank verification interface, and the check information verification request is configured to request the issuing bank server to check the domestic transaction order based on the check information.

6. The method as claimed in claim 4, wherein sending the payment verification request to the issuing bank server of the target overseas bank card further comprises:
sending an initialization verification request to the issuing bank server of the target overseas bank card, wherein the initialization verification request comprises the card information of the target overseas bank card, and the initialization verification request is configured to request the issuing bank server to perform initialization verification on the domestic transaction order based on the card information of the target overseas bank card.

7. The method as claimed in claim 1, wherein sending the payment request to the first bank server of the target operator system of the digital wallet comprises:
acquiring payment password information of the digital wallet, which is input by the user; and
sending the payment request to the first bank server of the target operator system, wherein the payment request comprises the payment password information.

8. The method as claimed in claim 1, further comprising:
displaying a first interface in response to the payment operation request, wherein the first interface comprises a target control, and the target control is configured to instruct to use the overseas bank card to recharge the digital wallet and to pay; and detecting the indication operation of the user comprises: detecting an operation of the user for the target control.

9. The method as claimed in claim 1, further comprising:
displaying a second interface in response to the payment operation request, wherein the second interface comprises a first control, and the first control is configured to instruct to recharge the digital wallet and to pay; and detecting the indication operation of the user comprises: displaying a third interface after detecting an operation of the user for the first control, wherein the third interface comprises a second control, and the second control is configured to instruct to use the overseas bank card to recharge the digital wallet; and
detecting an operation of the user for the second control.

10. The method as claimed in claim 1, wherein acquiring the card information of the target overseas bank card comprises:
detecting an operation for the card information of the target overseas bank card, which is input by the user; or detecting an operation for the registered target overseas bank card of the digital wallet, which is indicated by the user.

11. The method as claimed in claim 1, further comprising:
displaying a fourth interface after receiving the payment operation request, wherein the fourth interface comprises prompt information, and the prompt information is configured to prompt the user to input card information of a bank card which recharges the digital wallet for payment;
detecting the indication operation of the user comprises:
detecting an operation for the card information of the bank card, which is input by the user, wherein the input bank card is an overseas bank card; or detecting an operation for a registered bank card of the digital wallet, which is indicated by the user, wherein the registered bank card is an overseas bank card; and
acquiring the card information of the target overseas bank card comprises:
acquiring the card information of the overseas bank card, which is input by the user; or acquiring the card information of the registered overseas bank card of the digital wallet, which is indicated by the user.

12. The method as claimed in claim 1, wherein receiving the payment operation request comprises:
receiving the payment operation request in response to a code scanning operation for a collection code; or,
receiving the payment operation request in response to a code scanned operation for a payment code of the digital wallet.

13. A cross-border payment apparatus, comprising:
a receiving module, configured to receive a payment operation request, wherein the payment operation request is configured to request to pay for a domestic transaction order by using a digital wallet created on a client;
an acquisition module, configured to: in response to detecting an indication operation of a user, acquire card information of a target overseas bank card that is about to recharge the digital wallet, wherein the indication operation is configured to instruct to use an overseas bank card to recharge the digital wallet and to use the digital wallet to pay for the domestic transaction order; and
a payment module, configured to send a payment request to a first bank server of a target operator system of the digital wallet, so as to request to exchange a currency in the target overseas bank card into a digital currency to recharge the digital wallet, and use a balance in the digital wallet to pay for the domestic transaction order, wherein,
the receiving module is further configured to receive payment result information sent by the first bank server, wherein the payment result information is configured to indicate that the digital wallet has been recharged by using the target overseas bank card and that the transaction order has been paid by using the digital wallet.

14. An electronic device, comprising:
a processor; and
a memory, configured to store an executable instruction of the processor, wherein the processor is configured to execute the instruction so as to implement the method as claimed in o any one of claims 1-10.

15. A computer-readable storage medium, storing a computer execution instruction, wherein when the computer execution instruction is executed by a processor of an electronic device, the electronic device is caused to execute the method as claimed in any one of claims 1-10.
